# EUROPÄISCHE PATENTSCHRIFT

(11) **EP 2 356 012 B1**
(45) Veröffentlichungstag und Bekanntmachung des Hinweises auf die Patenterteilung: **17.10.2012**
(21) Anmeldenummer: 09796947.1
(22) Anmeldetag: 05.12.2009
(51) Int. Cl.: B62D 25/08

(54) **RÜCKWANDMODUL**
REAR WALL MODULE
MODULE DE PAROI ARRIÈRE

(30) Priorität: 10.12.2008 DE 102008061515
(43) Veröffentlichungstag der Anmeldung: 17.08.2011
(73) Patentinhaber: Daimler AG, 70327 Stuttgart (DE)
(72) Erfinder: HORNUNG, Markus, 71144 Steinenbronn (DE); KRASS, Benedikt, 71032 Böblingen (DE); MUTSCHLER, Robert, 74395 Mundelsheim (DE); ZIMMERMANN, Joerg, 75365 Calw (DE)
(74) Vertreter: JENSEN & SON
(86) Internationale Anmeldenummer: PCT/EP2009/008701
(87) Internationale Veröffentlichungsnummer: WO 2010/066388

(56) Entgegenhaltungen:
- EP-A2- 0 987 168
- EP-A2- 1 084 914
- EP-A2- 1 932 728
- WO-A1-2006/125926
- DE-A1- 19 843 024
- DE-A1-102006 014 402
- DE-A1-102007 002 763

## Beschreibung

Die Erfindung betrifft ein Rückwandmodul zur Befestigung an einer Karosserie eines Personenkraftwagens, sowie ein Verfahren zum Herstellen einer Kraftwagenkarosserie mit einem derartigen Rückwandmodul.

Die Rückwand trennt den Fahrgastraum eines Personenkraftwagens vom Kofferraum beziehungsweise Motorraum bei heckmotorgetriebenen Fahrzeugen. In der Regel ist die Rückwand einteilig mit der Hutablage ausgeführt, wird bereits im Rohbau mit der Karosserie gefügt und durchläuft in der Folge mit dieser die kathodische Tauchlackierung. Aufgrund der schlechten Zugänglichkeit der Rückwand in der Endmontage ist daher die folgende Montage von Anbauteilen, wie beispielsweise Sicherheitsgurten, Lautsprechern oder ähnlichem, sehr aufwendig. Durch die einteilige Ausführung von Rückwand und Hutablage werden zudem vorhandene Leichtbaupotenziale nicht vollständig ausgeschöpft.

Besondere Probleme ergeben sich hierbei insbesondere bei der Verkabelung einer derartigen Rückwand. Diese erfordert mehrere, besonders komplexe Arbeitsschritte und kann daher unter den Bedingungen schlechter Zugänglichkeit nur unter großen Schwierigkeiten montiert werden. Insbesondere das Durchführen von Kabeln durch entsprechende Durchtrittsöffnungen unter diesen Bedingungen kann die Isolierung der Kabel beschädigen, so dass separate Schutzelemente für die Kabel notwendig sind.

Die DE 196 428 21 A1 offenbart eine Aufbaustruktur für ein Cabriolet mit einer als separates Modul aufgebauten Rückwand. Ein solches Rückwandmodul erfordert nachteiliger Weise noch immer einen hohen Fertigungsaufwand.

Weitere Biespiele sind von DE 102006014402 sowie EP0987168 bekannt

Der vorliegenden Erfindung liegt somit die Aufgabe zugrunde, ein Rückwandmodul und ein Verfahren der eingangs genannten Art so weiter zu entwickeln, dass eine noch einfachere und kostengünstigere Fertigung ermöglicht wird.

Diese Aufgabe wird durch ein Rückwandmodul mit den Merkmalen des Patentanspruchs 1 sowie durch ein Verfahren zum Herstellen einer Kraftwagenkarosserie mit den Merkmalen des Patentanspruchs 12 gelöst.

Bei dem Rückwandmodul gemäß Patentanspruch 1 ist es vorgesehen, dass wenigstens ein einstückig mit dem Rückwandmodul ausgebildetes Befestigungselement vorgesehen ist, mittels welchem wenigstens ein Ausstattungsteil oder einer Verkabelung, eine Leitung, oder dgl. an dem Rückwandmodul festlegbar ist. Zudem ist wenigstens ein einstückig mit dem Rückwandmodul ausgebildetes Befestigungselement vorgesehen, das in eine entsprechende Öffnung der Kraftwagenkarosserie eingreift und das Rückwandmodul in seiner Position relativ zur Kraftwagenkarosserie fixiert. Mit anderen Worten ist erfindungsgemäß an dem Rückwandmodul wenigstens ein einstückig mit diesem ausgebildetes Befestigungselement vorgesehen, wobei zumindest eines zur Anordnung eines Bauteils an dem Rückwandmodul und zumindest ein anderes zur Halterung des Rückwandmoduls an der Kraftwagenkarosserie dient. Durch die einstückige Ausbildung mit dem Rückwandmodul kann somit auf eine aufwendige Festlegung des Befestigungselements an dem Rückwandmodul verzichtet werden, was ersichtlicher Weise zu einer erheblich einfacheren und kostengünstigeren Fertigung führt.

Das Rückwandmodul verfügt folglich über wenigstens ein Befestigungselement zum vorläufigen Verbinden des Rückwandmoduls mit einer Rohbaukarosserie. Hierdurch kann eine sichere Positionierung des Rückwandmoduls, beispielsweise auch während des Aushärtens einer Klebeverbindung zwischen Rückwandmodul und Rohbaukarosserie, gewährleistet werden. Weiterhin ist bevorzugt wenigstens ein Befestigungselement für das wenigstens eine Ausstattungsteil vorgesehen. Dieses ist bevorzugt ebenfalls einstückig mit dem Rückwandmodul ausgeführt, so dass die genannten Montageerleichterungen für die Verkabelung auch für das Ausstattungsteil selbst zum Tragen kommen.

In weiterer Ausgestaltung der Erfindung ist das wenigstens eine Befestigungselement als Clips- oder Rastverbindungselement ausgebildet. Dies ermöglicht eine reversible Befestigung der Leitung oder Verkabelung, so dass diese im Falle eines Defekts einfach ausgetauscht werden kann. Zudem lässt sich eine besonders einfache Festlegung realisieren.

Ist das Rückwandmodul als Gussbauteil, insbesondere als Leichtgussbauteil, ausgebildet, so lassen sich die einstückig angeformten Befestigungselemente besonders einfach realisieren. Zudem kann ein kosten- und gewichtsgünstiges Rückwandmodul geschaffen werden. Insbesondere beim Magnesium-Druckguss sind aufgrund der hohen Steifigkeit des Materials Wandstärken im Bereich von 1,5 bis 2 mm realisierbar, wodurch eine besonders leichte Ausführung des Rückwandmoduls bei gleichzeitig hoher Festigkeit möglich wird.

In einer weiteren Ausführungsform der Erfindung kann das Rückwandmodul als Kunststoffbauteil ausgebildet. Dies ermöglicht eine besonders leichte Auslegung und einfache Fertigung des Rückwandmoduls.

Zudem vorteilhaft ist es, wenn das Rückwandmodul eine Rückwand und eine Bodenwand umfasst, welche sich in einem Winkel, insbesondere einem spitzen Winkel, zueinander erstrecken. Hierdurch kann ein besonders steifes Rückwandmodul geschaffen werden, welches auf besonders günstige Weise zur Aussteifung der Kraftwagenkarosserie beiträgt.

In weiterer Ausgestaltung der Erfindung weist das Rückwandmodul wenigstens eine sich in Fahrzeughochrichtung erstreckende Wand auf. Damit ergibt sich eine optimale Versteifung des Rückwandmoduls, so dass die Materialdicke des Rückwandmoduls weiter verringert werden kann und so weiteres Gewicht eingespart wird.

Eine besonders günstige Aussteifung des Rückwandmoduls ergibt sich, wenn sich die in Fahrzeughochrichtung erstreckende Wand die Rückwand mit der Bodenwand verbindet. Hierdurch wird eine Aussteifung der im spitzen Winkel zueinander stehenden Wände über Eck erreicht.

Weiterhin vorteilhaft ist es, wenn eine Mehrzahl von sich in Fahrzeughochrichtung erstreckenden Wänden vorgesehen ist, welche Fächer für die Ausstattungsteile bilden. Hierdurch ergibt sich eine besonders Platz sparende Anordnung der Ausstattungsteile an dem Rückwandmodul. An den sich in Fahrzeughochrichtung erstreckenden Wänden kann zudem auf einfache Weise eine dem Kofferraum zugewandte Verkleidungswand befestigt werden, um die einzelnen Fächer nach dem Ausstatten zu verschließen.

Um eine problemlose Verbindung des Rückwandmoduls mit der Rohbaukarosserie des Kraftwagens zu ermöglichen ist in einer weiteren Ausführungsform ein Flansch zum Befestigen des Rückwandmoduls an einer Hutablage vorgesehen. Weiterhin kann ein zusätzlicher Flansch zum Befestigen des Rückwandmoduls an einem Querträger der Fahrzeugkarosserie vorgesehen sein. Damit ergibt sich eine optimale und großflächige Anbindung des Rückwandmoduls an die Rohbaukarosserie, so dass die nötige Stabilität gewährleistet ist.

Die Erfindung betrifft weiterhin ein Verfahren zum Herstellen einer Kraftwagenkarosserie mit einem derartigen Rückwandmodul. Hierbei werden zunächst eine lackierte Rohbaukarosserie sowie ein Rückwandmodul mit wenigstens einem einstückig angeformten Befestigungselement bereitgestellt. Vorzugsweise nach dem Montieren wenigstens eines Ausstattungsteils, einer Leitung, eines Kabelstrangs wird dann schließlich das Rückwandmodul an die Rohbaukarosserie montiert. Dies kann gegebenenfalls mit einem Befestigungselement erfolgen, welches einstückig mit dem Rückwandmodul verbunden ist.

Das Rückwandmodul muss also beispielsweise nicht zusammen mit dem Karosserierohbau die Tauchlackierung durchlaufen, sondern wird außerhalb der Hauptfertigungslinie separat vom Rohbau vorbereitet und beispielsweise mit Ausstattungsteilen und der Verkabelung bestückt. Erst nach der vollständigen Bestückung des Rückwandmoduls wird dieses wieder in die Hauptfertigungslinie der Endmontage eingeschleust und mit der lackierten Karosserie verbunden. Die eingangs geschilderten Zugänglichkeitsprobleme bei der Bestückung der Rückwand in vollständigen Rohbau treten hier so nicht auf, wodurch die Herstellung des Kraftwagens beschleunigt und verbilligt wird.

Bei der Montage des Rückwandmoduls zeichnet sich ein vorteilhaftes Verfahren dadurch aus, dass das Rückwandmodul in die Kraftwagenkarosserie eingeklebt wird, wobei Befestigungselemente vorgesehen sind, mittels welchen das Rückwandmodul an der Kraftwagenkarosserie gehalten wird. Das Rückwandmodul enthält hierzu beispielsweise an einer Oberkante und an einer Unterkante, ggf. auch an seinen Seiten Befestigungselemente, über die das Rückwandmodul in den Rohbau bei der Endmontage eingefügt wird und die dort eine Fixierung bilden, solange der Montagekleber noch nicht ausgehärtet ist, mittels dessen die Rückwand mit dem Rohbau unlösbar verbunden wird.

Im Folgenden soll die Erfindung und ihre Ausführungsformen anhand der Zeichnungen näher erläutert werden. Hierbei zeigen:

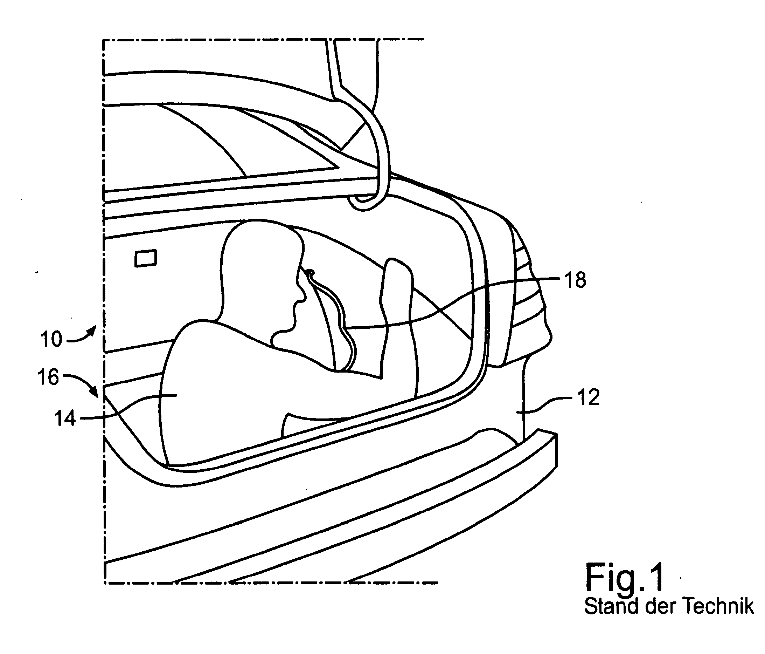

- Fig. 1: eine schematische Perspektivdarstellung auf ein hinteres Ende eines Kraftwagens im Bereich eines Kofferraums, wobei sich ein Werker in dem Kofferraum befindet, welcher die Kabelmontage verschiedener Leitungen, Kabel oder dgl. an einer Rückwand des Kofferraum nach einem heute üblichen Verfahren vornimmt;
- Fig. 2: eine perspektivische Darstellung eines Ausführungsbeispiels eines erfindungsgemäßen Rückwandmoduls;

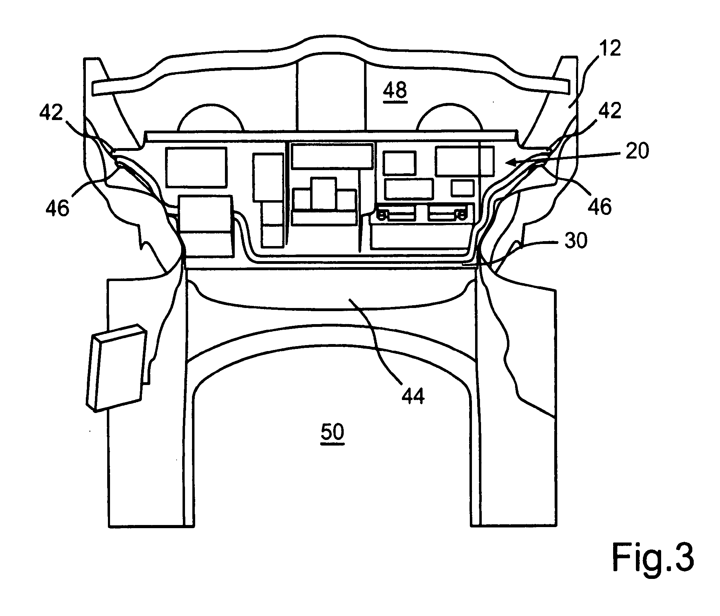

- Fig. 3: eine perspektivische Darstellung eines Ausführungsbeispiels eines erfindungsgemäßen Rückwandmoduls in seinem eingebauten Zustand in der Karosserie.

Bislang werden Rückwände 10 für Kraftwagen zunächst an der Karosserie 12 im Rohbau gefügt und durchlaufen gemeinsam mit diesem die kathodische Tauchlackierung. Ausstattungsteile und Verkabelung können daher erst nach dem Lackiervorgang an die Rückwand 10 montiert werden. Aufgrund der schlechten Zugänglichkeit ist dies ein aufwendiger Vorgang, welcher sich nicht oder nur schlecht automatisieren lässt. In der Regel muss ein Arbeiter 14 hierzu in den Kofferraum 16 des Rohbaus 12 einsteigen und dann dort von Hand die Verkabelung 18 verlegen. Hierdurch ist kein kontinuierlicher Bandbetrieb bei der Montage der Verkabelung im Rückwandbereich möglich. Ein getakteter Lauf des Bandes soll jedoch nach Möglichkeiten vermieden werden, da im Taktbetrieb die Gesamtfertigungsdauer erhöht und gegebenenfalls eine Pufferung zwischen unterschiedlichen Bandabschnitten notwendig macht.

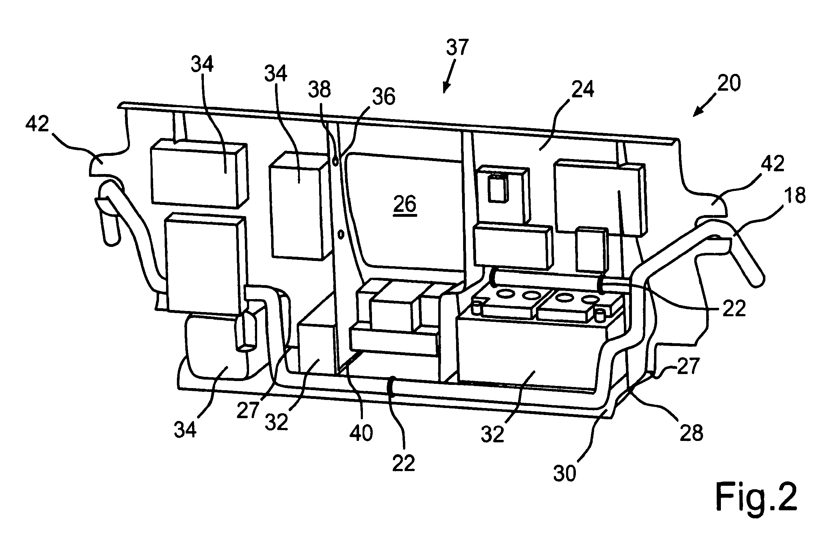

Erfindungsgemäß wird dieses Problem dadurch gelöst, an Stelle einer fest mit dem Rohbau 12 verbundenen Rückwand 10 ein Rückwandmodul 20, wie in Fig. 2 dargestellt, zu verwenden.

Das Rückwandmodul 20 besteht im vorliegenden Fall aus einem Gussteil, insbesondere aus einem Leichtmetallgussteil aus einer Aluminium- oder Magnesiumlegierung. Gleichfalls wäre es auch denkbar, das Rückwandmodul 20 aus einem entsprechend belastungsfähigen Kunststoff, beispielsweise einem faserverstärkten Kunststoff, zu gestalten.

Das Rückwandmodul 20 durchläuft dabei nicht gemeinsam mit dem Rohbau bzw. der Kraftwagenkarosserie 12 die kathodische Tauchlackierung, sondern wird außerhalb der Hauptfertigungslinie separat bearbeitet. Hierdurch entfallen die geschilderten Zugänglichkeitsprobleme.

Um ein einfaches und effizientes Verlegen der Verkabelung 18 zu ermöglichen, sind am Rückwandmodul 20 eine Mehrzahl von Befestigungselementen 22 in Form von Clips- bzw. Rastverbindungselemente vorgesehen, an welchen die Verkabelung 18 eingeclipst werden kann. Die Besonderheit im vorliegenden Fall ist, dass diese Befestigungselemente 22, deren Funktion im Weiteren noch näher erläutert werden wird, einstückig mit dem Rückwandmodul 20 ausgebildet sind. Dies erfolgt im vorliegenden Fall durch einstückiges Anformen der Befestigungselemente 22 an das Rückwandmodul 20.

Das Rückwandmodul 20 umfasst eine Rückwand 24, welche in Einbaulage des Rückwandmoduls 20 in Fahrzeughochrichtung verläuft und welche durch eine Durchtrittsöffnung 26 für einen Skisack, Kühlschrank oder dgl. durchbrochen ist. An der Unterseite des Rückwandmoduls 20 schließt sich eine im Wesentlichen waagrecht verlaufende Bodenwand 28 an, welche durch einen Flansch 30 abgeschlossen wird, über welchen das Rückwandmodul 20 beispielsweise an einem Querträger des Fahrzeuges festgelegt werden kann. Die Rückwand 24 und die Bodenwand 28, welche im Bereich einer in Fig.2 erkennbaren, In Fahrzeugquerrichtung verlaufenden Kante 27 aneinander angrenzen, schließen vorliegend einen spitzen Winkel ein.

Die Rückwand 24 ist mit Ausnahme der Durchtrittsöffnung 26 für den Skisack bzw. Kühlschrank und Verschraubungslöchern durchgehend geschlossen. Aufgrund der relativ geschlossenen Ausbildung der Rückwand 24 wird die Akustik verbessert, d.h. die Durchschallung zur Fahrgastzelle verhindert.

Die Bodenwand 28 dient gleichzeitig als Standfläche für Zusatzgeräte, wie beispielsweise Batterien 32 und elektrische Steuergeräte 34. Weitere elektrische Steuergeräte 34 können an der Rückwand 24 des Rückwandmoduls 20 festgelegt werden. Hierzu dienen weitere Befestigungselemente 22, an welchen die Steuergeräte 34 über Schrauben 38 befestigbar sind.

Das Rückwandmodul 20 weist darüber hinaus eine Mehrzahl von sich in Fahrzeughochrichtung erstreckenden Wänden 36 auf, wobei zumindest eine mittlere Wand 36 die Rückwand 24 mit der Bodenwand 28 verbindet. Sie dient daher gleichzeitig als Versteifungselement, welche das Rückwandmodul 20 in seiner Gesamtheit versteift. Die sich in Fahrzeughochrichtung erstreckenden Wände 36 dienen dabei als Fächer 37 für die Ausstattungsteile 32, 34. An den Wänden können ebenfalls Befestigungselemente 22 in Form von Clips- und/oder Rastverbindungselementen angeordnet sein, welche zur Halterung der Ausstattungsteile 32, 34 dienen. Zusätzlich wird durch die Wände 36 eine seitliche Abstützung beispielsweise der Batterien 32 erzielt.

Zum vorläufigen Anbinden des Rückwandmoduls 20 kann dieses beispielsweise an einem Querträger 44 der Kraftwagenkarosserie 12 festgelegt werden. Hierzu sind Befestigungselemente 42 vorgesehen, welche wiederum als Clips- bzw. Rastverbindungselemente ausgebildet sein können, die in entsprechende Öffnungen 46 des Rohbaus 12 eingreifen und das Rückwandmodul 20 in seiner Position relativ zum Rohbau 12 fixieren. Das Rückwandmodul 20 bildet so eine Trennung zwischen der Fahrgastzelle 48 und einem Kofferraum 50 des Kraftwagens. Neben den gezeigten elektrischen Zusatzgeräten können weitere Geräte, wie beispielsweise Dreipunkt-Sicherheitsgurte und dgl. am Rückwandmodul 20 angebunden werden. Das Rückwandmodul 20 kann neben seiner Unterseite auch an einer Unterkante und gegebenenfalls auch an seinen Seiten mit Befestigungselementen 42 versehen sein, über die das Rückwandmodul 20 in der Karosserie 12 bei der Endmontage eingefügt wird und dort die Fixierung bildet, solange der Montagekleber noch nicht ausgehärtet ist, mittels dessen das Rückwandmodul 20 mit der Karosserie 12 unlösbar verbunden wird.

Die Bestückung des Rückwandmoduls 20 mit der Verkabelung 18, den Batterien 32 und den elektrischen Steuergeräten 34 erfolgt dabei vorteilhafter Weise außerhalb der Hauptfertigungslinie, so dass dies ohne Zugangsprobleme durchgeführt werden kann. Erst nach der vollständigen Bestückung des Rückwandmoduls 20 und dem kathodischen Tauchlackieren des Rohbaus 12 wird nun das Rückwandmodul 20 mit dem Rohbau 12 verbunden.

Dies kann vorteilhafter Weise automatisch geschehen, da die gesamte Bestückung ja schon an Ort und Stelle ist. Da die Verkabelung 18 nicht mehr aufwändig durch entsprechende Durchtrittsöffnungen gefädelt werden muss, kann gegebenenfalls auch ein Durchscheuerschutz für die Verkabelung 18 entfallen. Damit wird weiter an Gewicht und Kosten gespart. Auch eine Verkürzung des Kabelstranges 18 ist möglich, da keine Zusatzlänge zum Durchfädeln mehr zur Verfügung gestellt werden muss.

Durch die Aussstattung des Rückwandmoduls 20 bereits vor dem Befestigungen an der Kraftwagenkarosserie 12 ist es möglich, dass auf gleichem Raum wie früher mehr Ausstattungsteile 32, 34 unterzubringen sind oder bei gleicher Anzahl an Ausstattungsteilen 32, 34 eine kompaktere Bauform zu erzielen ist, was für eine großzügigere Gestaltungsmöglichkeit des Kofferraums 16 bzw. der angrenzenden Räume von Vorteil ist. Weiterhin ist durch die Modulbildung eine sichere Befestigung der Ausstattungsteile 32, 34 allein nur durch Steckverbindungen bzw. Rastverbindungen möglich, so dass aufwändiges Verschrauben oder gar Verschweißen oder Verlöten entfallen kann. Dies erspart relativ viel an Montagezeit.

Aufgrund der Modularisierung kann der Kabelstrang bzw. die Verkabelung 18 einfach eingelegt werden und muss nicht mehr mit großem Aufwand durch Montageöffnungen durchgefädelt werden. Hierbei kann die Länge des Kabelstrangs bzw. der Verkabelung 18 genau auf die gerade notwendige Verlegungslänge gekürzt werden, so dass einiges an Gewicht eingespart wird.

Der Kabelstrang bzw. die Verkabelung 18 ist bevorzugt weitgehend exakt entlang der Komponentenanordnung der einzelnen Ausstattungsteile 32, 34 verlegt und zur Halterung an der Rückwand 24 festgeclipst. Der Kabelstrang bzw. die Verkabelung 18 ist kann an der Rückwand 24 oder der Bodenwand 28 befestigt sein.

Gemäß dem Ausführungsbeispiel sind die elektrischen Komponenten auf Fahrzeugheckseite der Rückwand 24 angeordnet. Denkbar wäre jedoch auch alternativ eine Anordnung der elektrischen Komponenten auf der Fahrzeugbugseite der Rückwand 24. Des Weiteren sind Mischformen der Anordnungen auch denkbar.

## Patentansprüche

1. Rückwandmodul (20) zur Befestigung an einer Karosserie eines Kraftwagens, welches vor dem Einbau in die Kraftwagenkarosserie (12) mit wenigstens einem Ausstattungsteil (32, 34) ausstattbar ist, wobei wenigstens ein einstückig mit dem Rückwandmodul (20) ausgebildetes Befestigungselement (22) vorgesehen ist, mittels welchem wenigstens ein Ausstattungsteil (32, 34), oder einer Verkabelung (18), eine Leitung, oder dgl. an dem Rückwandmodul (20) festlegbar ist,
**dadurch gekennzeichnet, dass**
wenigstens ein einstückig mit dem Rückwandmodul (20) ausgebildetes Befestigungselement (42) vorgesehen ist, das in eine entsprechende Öffnung (46) der Kraftwagenkarosserie (12) eingreift und das Rückwandmodul (20) in seiner Position relativ zur Kraftwagenkarosserie (12) fixiert.

2. Rückwandmodul (20) nach Anspruch 1,
**dadurch gekennzeichnet, dass**
das wenigstens eine Befestigungselement (22, 42) als Clips- oder Rastverbindungselement ausgebildet ist.

3. Rückwandmodul (20) nach Anspruch 1 oder 2,
**dadurch gekennzeichnet, dass**
das Rückwandmodul (20) als Gussbauteil, insbesondere als Leichtgussbauteil, ausgebildet ist.

4. Rückwandmodul (20) nach einem der vorherigen Ansprüche,
**dadurch gekennzeichnet, dass**
das Rückwandmodul (20) eine Rückwand (24) und eine Bodenwand (28) umfasst,
welche sich in einem Winkel, insbesondere einem spitzen Winkel, zueinander erstrecken.

5. Rückwandmodul (20) nach einem der vorherigen Ansprüche,
**dadurch gekennzeichnet, dass**
das Rückwandmodul (20) wenigstens eine sich in Fahrzeughochrichtung erstreckende Wand (36) aufweist.

6. Rückwandmodul (20) nach Anspruch 4 und 5,
**dadurch gekennzeichnet, dass**
sich die in Fahrzeughochrichtung erstreckende Wand (36) die Rückwand (24) mit der Bodenwand (28) verbindet.

7. Rückwandmodul (20) nach Anspruch 5 oder 6,
**dadurch gekennzeichnet, dass**
eine Mehrzahl von sich in Fahrzeughochrichtung erstreckenden Wänden (36) ist, welche Fächer (37) für die Ausstattungsteile (32, 34) bilden.

8. Rückwandmodul (20) nach einem der vorherigen Ansprüche,
**dadurch gekennzeichnet, dass**
eine Durchtrittsöffnung (26) für einen Skisack vorgesehen ist.

9. Rückwandmodul (20) nach einem der vorherigen Ansprüche,
**dadurch gekennzeichnet, dass**
ein Flansch zum Befestigen des Rückwandmoduls (20) an einer Hutablage vorgesehen ist.

10. Rückwandmodul (20) nach einem der vorherigen Ansprüche,
**dadurch gekennzeichnet, dass**
ein Flansch (30) zum Befestigen des Rückwandmoduls (20) an einem Querträger (44) der Fahrzeugkarosserie (12) vorgesehen ist.

11. Befestigungsanordnung eines Rückwandmoduls (20) an einer Karosserie eines Kraftwagens, welches vor dem Einbau in die Karosserie (12) mit wenigstens einem Ausstattungsteil (32, 34) ausstattbar ist, wobei das Rückwandmodul (20) nach einem der Ansprüche 1 bis 10 ausgebildet ist.

12. Verfahren zum Herstellen einer Kraftwagenkarosserie (12) mit einem Rückwandmodul (20) nach einem der Ansprüche 1 bis 10, mit den Schritten:
- Bereitstellen einer lackierten Rohbaukarosserie (12);
- Bereitstellen eines Rückwandmoduls (20) mit wenigstens einem einstückig ausgebildeten Befestigungselement (22, 42);
- Montieren des Rückwandmoduls (20) an der Kraftwagenkarosserie (12).

13. Verfahren nach Anspruch 12,
**dadurch gekennzeichnet, dass**
vor dem Montieren des Rückwandmoduls (20) an der Kraftwagenkarosserie (12) wenigstens ein Ausstattungsteil (32, 34), oder eine Verkabelung (18), eine Leitung, oder dgl. an dem Rückwandmodul (20) montiert wird.

14. Verfahren nach Anspruch 12 oder 13,
**dadurch gekennzeichnet, dass**
das Rückwandmodul (20) in die Kraftwagenkarosserie (12) eingeklebt wird, wobei Befestigungselemente (22) vorgesehen sind, mittels welchen das Rückwandmodul (20) an der Kraftwagenkarosserie (12) gehalten wird.

## Claims

1. Rear wall module (20) for securing to a body of a motor vehicle, which rear wall module (20) can, before being installed into the motor vehicle body (12), be provided with at least one piece of equipment (32, 34), wherein at least one fastening element (22) integrated with the rear wall module (20) is provided by means of which at least one piece of equipment (32, 34) or wiring (18), a line or the like can be secured to the rear wall module (20),
**characterised in that**
at least one fastening element (42) integrated with the rear wall module (20) is provided, which fastening element (42) engages a corresponding opening (46) of the motor vehicle body (12) and secures the rear wall module (20) in its position with respect to the motor vehicle body (12).

2. Rear wall module (20) according to claim 1,
**characterised in that**
the at least one fastening element (22, 42) is designed as a clips or latching element.

3. Rear wall module (20) according to claim 1 or 2,
**characterised in that**
the rear wall module (20) is designed as a casting, in particular as a lightweight casting.

4. Rear wall module (20) according to any of the preceding claims,
**characterised in that**
the rear wall module (20) comprises a rear wall (24) and a base wall (28) extending at an angle, in particular at an acute angle, relative to each other.

5. Rear wall module (20) according to any of the preceding claims,
**characterised in that**
the rear wall module (20) comprises at least one wall (36) extending in the vertical direction of the vehicle.

6. Rear wall module (20) according to claims 4 and 5,
**characterised in that**
the wall (36) extending in the vertical direction of the vehicle joins the rear wall (24) to the base wall (28).

7. Rear wall module (20) according to claim 5 or 6,
**characterised in that**
a plurality of walls (36) extending in the vertical direction of the vehicle is provided to form compartments (37) for the pieces of equipment (32, 43).

8. Rear wall module (20) according to any of the preceding claims,
**characterised in that**
a through-opening (26) for a ski bag is provided.

9. Rear wall module (20) according to any of the preceding claims,
**characterised in that**
a flange is provided for securing the real wall module (20) to a rear shelf.

10. Rear wall module (20) according to any of the preceding claims,
**characterised in that**
a flange (30) is provided for securing the real wall module (20) to a crossmember (44) of the vehicle body (12).

11. Mounting arrangement of a rear wall module (20) on a body of a motor vehicle, which rear wall module (20) can, before being installed into the motor vehicle body (12), be provided with at least one piece of equipment (32, 34), the rear wall module (20) being designed according to any of claims 1 to 10.

12. Method for producing a motor vehicle body (12) provided with a rear wall module (20) according to any of claims 1 to 10, the method comprising the steps of:
- provision of a painted body-in white (12);
- provision of a rear wall module (10) with at least one integral fastening element (22, 42);
- mounting of the rear wall module (20) on the motor vehicle body (12).

13. Method according to claim 12,
**characterised in that**
at least one piece of equipment (32, 34) or wiring (18), a line or the like is secured to the rear wall module (20) before the rear wall module (20) is mounted on the motor vehicle body (12).

14. Method according to claim 12 or 13,
**characterised in that**
the rear wall module (20) is glued into the motor vehicle body (12), wherein fastening elements (22) are provided to hold the rear wall module (20) on the motor vehicle body (12).

## Revendications

1. Module de paroi arrière (20) à fixer sur une carrosserie d'un véhicule automobile lequel peut, avant d'être intégré dans la carrosserie (12) de véhicule automobile, être équipé d'au moins une pièce d'équipement (32, 34), il est prévu au moins un élément de fixation (22) qui est formé d'un seul tenant avec le module de paroi arrière (20) au moyen duquel au moins une pièce d'équipement (32, 34) ou un câblage (18), une ligne ou similaire peut être fixé sur le module de paroi arrière (20), **caractérisé en ce qu'**il est prévu au moins un élément de fixation (42) qui est formé d'un seul tenant avec le module de paroi arrière (20) et qui s'introduit dans une ouverture (46) correspondante de la carrosserie du véhicule automobile (12) et qui bloque le module de paroi arrière (20) dans sa position par rapport à la carrosserie (12) du véhicule automobile.

2. Module de paroi arrière (20) selon la revendication 1, **caractérisé en ce que** l'au moins un élément de fixation (22, 42) est conçu comme un élément de liaison à crans ou à clips.

3. Module de paroi arrière (20) selon la revendication 1 ou la revendication 2, **caractérisé en ce que** le module de paroi arrière (20) est conçue comme une pièce coulée, en particulier une pièce coulée légère.

4. Module de paroi arrière (20) selon l'une quelconque des revendications précédentes, **caractérisé en ce que** le module de paroi arrière (20) comprend une paroi arrière (24) et un fond (28) qui s'étendent l'une vers l'autre à un angle, en particulier à un angle aigu.

5. Module de paroi arrière (20) selon l'une quelconque des revendications précédentes, **caractérisé en ce que** le module de paroi arrière (20) présente une paroi (36) s'étendant dans la direction verticale du véhicule.

6. Module de paroi arrière (20) selon la revendication 4 ou la revendication 5, **caractérisé en ce que** la paroi (36) qui s'étend dans la direction verticale du véhicule relie la paroi arrière (24) au fond (28).

7. Module de paroi arrière (20) selon la revendication 5 ou la revendication 6, **caractérisé en ce qu'**une pluralité de parois (36) s'étendant dans la direction verticale du véhicule forme des compartiments (37) pour les pièces d'équipement (32, 34).

8. Module de paroi arrière (20) selon l'une des quelques revendications précédentes, **caractérisé en ce qu'**une ouverture de passage (26) est prévu pour une housse de skis.

9. Module de paroi arrière (20) selon l'une des quelques revendications précédentes, **caractérisé en ce qu'**une bride est prévue pour fixer le module de paroi arrière (20) sur une plage arrière.

10. Module de paroi arrière (20) selon l'une des quelques revendications précédentes, **caractérisé en ce qu'**une bride (30) est prévue pour fixer le module de paroi arrière (20) sur une traverse (44) de la carrosserie (12) du véhicule.

11. Dispositif de fixation d'un module de paroi arrière (20) sur une carrosserie d'un véhicule automobile lequel peut, avant d'être intégré dans la carrosserie (12), être équipé d'au moins une pièce d'équipement (32, 34), le module de paroi arrière (20) est conçu selon les revendications 1 à 10.

12. Procédé de fabrication d'une carrosserie (12) de véhicule automobile avec un module de paroi arrière (20) selon au moins l'une quelconque des revendications 1 à 10, comprenant les étapes suivantes :
- préparer une carrosserie (12) peinte ;
- préparer un module de paroi arrière (20) avec au moins un élément de fixation (22, 42) formé d'un seul tenant ;
- monter le module de paroi arrière (20) sur la carrosserie (12) du véhicule automobile.

13. Procédé selon la revendication 12, **caractérisé en ce qu'**avant le montage du module de paroi arrière (20) sur la carrosserie (12) du véhicule automobile au moins une pièce d'équipement (32, 34) ou un câblage (18), une ligne ou similaire peut être fixé sur le module de paroi arrière (20).

14. Procédé selon la revendication 12 ou la revendication 13, **caractérisé en ce que** le module de paroi arrière (20) est collé dans la carrosserie (12) du véhicule automobile, des éléments de fixation (22) étant prévus pour maintenir le module de paroi arrière (20) sur la carrosserie (12) du véhicule automobile.
